**Europäisches Patentamt**

(19) **European Patent Office**

**Office européen des brevets**

(11) Publication number : **0 338 273 B1**

(12) **EUROPEAN PATENT SPECIFICATION**

(45) Date of publication of patent specification : 03.06.92 Bulletin 92/23

(51) Int. Cl.⁵ : **H02G 1/12**

(21) Application number : **89105061.9**

(22) Date of filing : **21.03.89**

(54) **Cable jacket cutter.**

(30) Priority : **18.04.88 DE 3812862**

(43) Date of publication of application : **25.10.89 Bulletin 89/43**

(45) Publication of the grant of the patent : **03.06.92 Bulletin 92/23**

(84) Designated Contracting States : **AT BE CH DE ES FR GB GR IT LI NL SE**

(56) References cited :
**DE-A- 2 402 377**
**DE-A- 3 009 888**

(73) Proprietor : **Walter Rose GmbH & Co. KG
Lütkenheider Strasse 2
W-5800 Hagen 1 (DE)**

(72) Inventor : **Penz, Heinz
Kleine Strasse 22
W-5800 Hagen 1 (DE)**

(74) Representative : **Patentanwälte Meinke und
Dabringhaus Dipl.-Ing. J. Meinke Dipl.-Ing. W.
Dabringhaus
Westenhellweg 67
W-4600 Dortmund 1 (DE)**

## Description

The invention relates to a cable jacket cutter comprising a blade arranged on a base member, which blade is provided at its free end with a flattened portion which extends approximately perpendicular to the cut and between the interior and the jacket of the cable, and also comprising driving teeth with a hand lever drive, which driving teeth are likewise arranged on the base member and can be rolled - along the cable jacket.

A cable jacket cutter of the kind forming the precharacterising clause is known from the Applicant's DE-PS 24 02 377. A comparable construction is also disclosed in DE-PS 30 09 388 in which, in contrast to the patent precharacterising clause, the blade is arranged on a movable slide so that the blade can be advanced into the interior of the base member in order to prevent any injury to the operator. The blade is then simply extended for use.

A feature common to the known solutions is that they consist of an electrically conductive material with the result that, despite all precautions, it is impossible to ensure that the person using the cutter will not be injured in the event of the live cable cores being damaged.

In order to avoid such a risk, it has been proposed in an earlier unpublished Application of the Applicant that the cutting blade be mounted in an insulating body consisting especially of an insulating plastics material.

The object of the present invention is to improve the manufacture and handling ability of a cable jacket cutter without sacrificing the advantages of the known solutions.

This object is achieved according to the invention with a cable cutter of the kind described at the beginning as a result of both the base member and the hand lever being made of an insulating plastics material, the driving teeth of the hand lever drive being constructed as a metal component that is fastened to the hand lever.

The manufacture of both the base member and the hand lever drive from plastics material first of all meets the desire for simple manufacture, it being possible to use injection-moulded plastics parts which results in considerable savings especially with mass-production. At the same time, optimum electrical insulation is ensured. Since the hand lever drive in particular may also be subject to mechanical strain and since an optimum support between the toothed drive on the one hand and the cable jacket on the other hand must be ensured, it is precisely for these reasons that this region is constructed as a metal component which satisfies the requirements.

Arrangements comprise constructing the toothed drive as a curved element with the teeth on the outer curve, which element engages elements in the plastics hand lever, and/or providing the toothed drive with a substantially T-shaped cross-section, the middle limb of the T projecting into the plastics material of the hand lever.

It is known from the patent mentioned at the beginning (DE-PS 24 02 377) to fit attachment pieces of plastics material in the region of the cutting blade for the purpose of adaptation to different outer diameters of the cables being dealt with. Because of their clamping fit, it is frequently difficult or awkward to remove these attachment pieces by hand and, as a rule, the user will resort to a screw driver of the like, when improperly used, can also result in damage to the cable jacket cutter, especially the blade.

In order to facilitate handling, the invention makes provision for an ejection lever for uncoupling the attachment piece to be provided on the base member.

A further arrangement of the invention also serves to facilitate handling: with the adjustable mounting of the shaft between hand lever and base member, it comprises equipping the bearing axis with locking grooves for the respective adjustments, a corresponding locking projection being provided in a bearing shell which consists especially of plastics material.

The invention is described in detail below by way of example with reference to the drawings, in which:

Fig. 1 shows a side view of a cable cutter according to the invention with an attachment piece attached,

Fig. 2 shows a hand lever on its own,

Fig. 3 shows the head region of the cable jacket cutter and

Fig. 4 shows a partial section along the line IV-IV in Fig. 3.

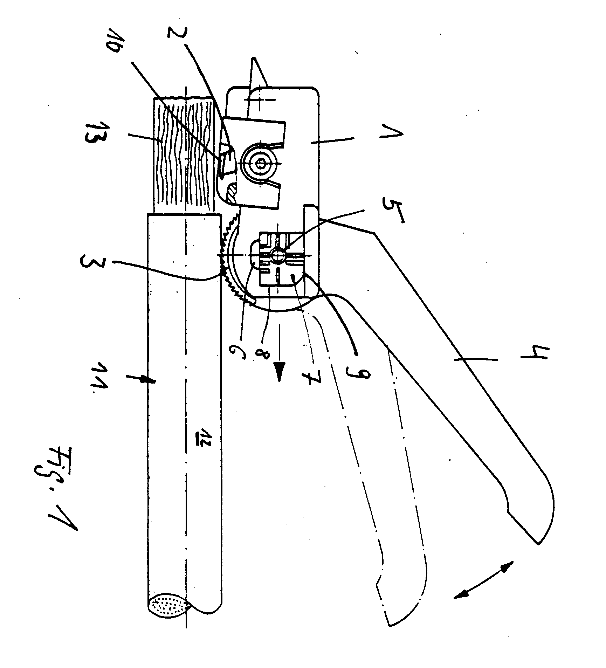

In the exemplary embodiment shown in Fig. 1, a cable jacket cutter consists substantially of a base member 1, a blade 2 supported therein and a toothed driving segment 3 having a hand lever 4 rigidly connected thereto, the hand lever 4 together with the driving teeth 3 being supported by a shaft 5 between a forked part of the base member 1 so as to be vertically displaceable in slots 6 arranged at both sides of the forked part of the base member 1.

Fastened to the two ends of the shaft 5 are substantially rectangular bearing plates 7, the edge faces 8 of which are at different distances from the centre of the shaft 5 such that when these edge faces 4 stop against the base member 1 by means of stop faces 9, the axis of rotation 5 and therewith the driving teeth 3 can adopt different heights with respect to the base member and hence with respect to the blade 2.

The blade 2 is provided at its lower end with a flattened portion 10 which in the radial cutting position is intended to extend approximately parallel to the longitudinal axis of a cable 11 which is to be cut, the height adaptation of the blade being so arranged that the blade 2 is intended to cut through the cable jacket 12 without, however, damaging the interior 13 of the cable.

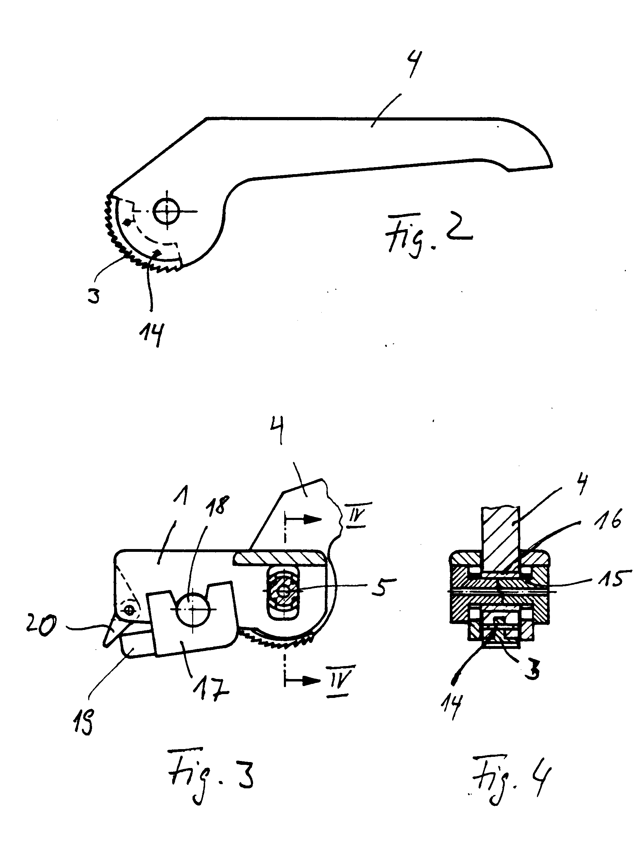

As will be apparent especially from Fig. 2 in conjunction with Fig. 4, the element comprising the driving teeth 3 is a metal component that is approximately T-shaped in cross-section and is connected to the hand lever 4 by means of a transverse pin arrangement 14. It is, of course, possible to provide another type of connection here.

The shaft 5 has locking grooves 15 in the four deep positions shown, whilst a casing 16 has corresponding locking projections, as is shown in section in Fig. 3 for example.

An attachment piece designated 17 is clipped on by means of projections 18 on the holding axis of the blade 2 in the example shown for the purpose of adaptation to a smaller outer diameter of the cable 11. To facilitate removal of this attachment piece 17, it is equipped with a backwardly pointing shoulder piece 19 which cooperates with an ejection lever 20 at the rearward end of the base member 1 as shown in Fig. 3. If this ejection lever 20 is moved downward from the position shown in Fig. 1 into the position shown in Fig. 3, the attachment piece 17 can be removed - fairly easily.

## Claims

1. A cable jacket cutter comprising a blade (2) arranged on a base member (1), which blade (2) is provided at its free end with a flattened portion (10) extending approximately perpendicular to the cut and between the interior and the jacket of the cable, and also comprising driving teeth (3) with a hand lever drive (4), which driving teeth (3) are likewise arranged on the base member (1) and can be rolled along the cable jacket (12), characterised in that both the base member (1) and the hand lever drive (4) are manufactured from an insulating plastics material, the driving teeth (3) of the hand lever drive being constructed as a metal component which is fastened to the hand lever (4).

2. A cable jacket cutter according to Claim 1, characterised in that the element comprising the driving teeth (3) is constructed as a curved element with the teeth on the outer curve, which engages elements in the plastics hand lever (4).

3. A cable jacket cutter according to Claim 2, characterised in that the element comprising the driving teeth (3) is substantially T-shaped in cross-section, the middle limb of the T projecting into the plastics material of the hand lever (4).

4. A cable jacket cutter according to one of the preceding claims comprising an attachment piece of plastics material that can be put on over the working blade for working on cables of relatively small outer diameter, characterised in that an ejection lever (20) for uncoupling the attachment piece (17) is provided on the base member (1).

5. A cable jacket cutter according to one of the preceding claims having an adjustable support of the shaft between the hand lever and the base body, characterised in that the bearing axis (5) is equipped with locking grooves (15) for the particular adjustments, a corresponding locking projection (16) being provided in a bearing shell.

## Patentansprüche

Kabelmantelschneider mit an einem Grundkörper (1) angeord neten Messer (2), welches Messer (2) an seinem freien Ende mit einer etwa senkrecht zur Schneide verlaufenden, zwi schen Kabelinneres und Kabelmantel greifende Abflachung (10) vorgesehen ist, sowie mit einer ebenfalls am Grundkör per (1) angeordneten, auf den Kabelmantel (12) abwälzba ren Antriebsverzahnung (3) mit Handhebeltrieb (4), dadurch gekennzeichnet, daß sowohl der Grundkörper (1) als auch der Handhebeltrieb (4) aus einem isolierenden Kunststoffmaterial gefertigt sind, wobei die Antriebsverzahnung (3) des Handhebeltriebes als am Handhebel (4) befestigtes Bauteil aus Metall ausge bildet ist.

2. Kabelmantelschneider nach Asnspruch 1, - dadurch gekennzeichnet, daß das Element mit der Antriebsverzahnung (3) als Bogenele ment mit der Verzahnung auf dem Außenbogen ausgebildet ist, welches mit Elementen in den Kunststoffhandhebel (4) ein greift.

3. Kabelmantelschneider nach Anspruch 2, - dadurch gekennzeichnet, daß das Element mit der Antriebsverzahnung (3) querschnitt lich im wesentlichen T-förmig ausgebildet ist, wobei der T-Mittelsteg in den Kunststoff des Handhebels (4) ein greift.

4. Kabelmantelschneider nach einem der vorangehenden An sprüche mit einem über das Arbeitsmesser steckbaren Aufsatz stück aus Kunststoff zum bearbeiten von Kabeln kleiner Außendurchmesser, dadurch gekennzeichnet, daß am Grundkörper (1) ein Auswurfbügel (20) zum Entkuppeln des Aufsatzstückes (17) vorgesehen ist.

5. Kabelmantelschneider nach einem der vorangehenden Ansprüche mit einer verstellbaren Lagerung der Achse zwischen Handhebel und Grundkörper, dadurch gekennzeichnet, daß die Lagerachse (5) mit Rastnuten (15) für die jeweili gen Verstellungen ausgerüstet ist, wobei in einer Lager buchse ein entsprechender Raststeg (16) vorgesehen ist.

**Revendications**

1. Outil à découper la gaine de câbles comprenant une lame (2) disposée sur un élément de base (1), laquelle lame (2) est munie sur son extrémité libre d'une portion aplatie (10) s'étendant approximativement de façon perpendiculaire à la coupe et entre l'intérieur et la gaine du câble, et comprenant également des dents d'entraînement (3) avec un système d'entraînement à levier manuel (4), lesquel les dents d'entraînement (3) sont également disposées sur l'élément de base (1) et peuvent être déplacées le long de la gaine du câble (12), caractérisé en ce que aussi bien l'élément de base (1) que le système d'entraîne ment à levier manuel (4) sont fabriqués à partir d'un maté riau plastique isolant, les dents d'entraînement (3) du système d'entraînement à levier manuel étant construites à partir d'un composant métallique qui est fixé sur le levier manuel (4).

2. Outil à découper la gaine de câbles selon la revendication 1, caractérisé en ce que l'élément comprenant les dents d'entraînement (3) est cons truit sous la forme d'un élément courbe avec les dents sur la courbe extérieure, qui coopère avec les éléments dans le levier manuel en plastique (4).

3. Outil à découper la gaine de câbles selon la revendication 2, caractérisé en ce que l'élément comprenant les dents d'entraînement (3) est sensi blement en forme de T en coupe transversale, la partie médiane du T faisant saillie dans le matériau plastique du levier manuel (4).

4. Outil à découper la gaine de câbles selon l'une quelconque des revendications précédentes, comprenant un élément de fixation en matériau plastique pouvant être monté sur la lame de travail pour travailler sur des câbles de diamètre extérieur relativement petit, caractérisé en ce qu'un levier d'éjection (20) destiné à désolidariser l'élément de fixation (17) est prévu sur l'élément de base (1).

5. Outil à découper la gaine de câbles selon l'une des revendications précédentes comportant un support régla ble de l'arbre entre le levier manuel et le corps de base, caractérisé en ce que l'axe de support (5) est doté de gorges de blocage (15) pour les réglages particuliers, une saillie de blocage correspondante (16) étant prévue dans l'enveloppe de support.

Fig. 1

Fig. 2

Fig. 3

Fig. 4